# EUROPEAN PATENT APPLICATION

(11) **EP 1 198 983 A1**
(43) Date of publication of application: **24.04.2002**
(21) Application number: 99931495.8
(22) Date of filing: 22.07.1999
(51) Int. Cl.: A01G 9/00

(54) **EMERGENCE HUSKED RICE PRODUCING DEVICE**

(71) Applicant: The Hisho Inc., Nakano-ku, Tokyo 164-0011 (JP)
(72) Inventor: MAEKAWA, Takaaki, Inashiki-gun, Ibaraki 300-0509 (JP); SUZUKI, Keitaro, Ushiku-shi, Ibaraki 300-1207 (JP)
(74) Representative: Lucas, Brian Ronald
(86) International application number: JP9903937
(87) International publication number: WO0106838

(57) **Abstract**

A sprouting brown rice producing device (11) comprises, in general, an airtight sprouting promoting tank (12) to which brown rice and water for promoting sprouting are supplied, and a recycled water generating system (13) recycling water used in the sprouting promoting tank (12), and making the recycled water flow back to the sprouting promoting tank (12). Brown rice charged from a raw material inlet (15) to the sprouting promoting tank (12) is kept floating in the water supplied from a water supply inlet (14). The recycled water generating system (13) comprises a warm water collection pipe (22) collecting water overflowing from the top of the sprouting promoting tank (12), a filtering module (23) removing bacteria and organic substances contained in the water collected from the sprouting promoting tank (12), and a flowing-back pipe (24) supplying the recycled water emitted from the filtering module (23) to the bottom of the sprouting promoting tank (12).

## Description

### Technical Field

The present invention relates to a sprouting brown rice producing device, and more particularly, to a sprouting brown rice producing device promoting the sprouting of brown rice, shortening the time required for rearing brown rice shoots and reducing the volume of used water.

### Background Art

Originally, rice has been eaten for a long time as a food staple, because it is a vegetable protein of good quality. Steamed rice in a grain state is a common way to eat rice. However, with the diversification of eating habits, rice has been less consumed. Especially, since rice is tough and difficult to be digested as it is, its usage is limited to steamed rice. For this reason, consideration is made in a way such that brown rice is germinated, brown rice shoots are reared, and germinated brown rice is milled and processed into germinated brown rice powder.

The germinated brown rice is shoots reared by germinating brown rice from which husks are removed. By germinating brown rice, the toughness of the brown rice is resolved, carbohydrates contained in the brown rice become reducing sugar, protein is decomposed into amino acids, and besides, fibers and vitamins are generated. Accordingly, germinated brown rice is milled, so that germinated brown rice powder becomes available as multiple-purpose food similar to flour.

However, it was difficult to produce germinated brown rice, because brown rice is putrefied in water by microorganisms, or its shoots become uneven despite germination, when being germinated.

As a conventional method producing germinated brown rice, a producing method recited by Japanese Laid-open Patent Publication No. 58-25419 is known. With the method recited by this publication, brown rice is soaked in a jellied liquid, in which starch or Japanese gelatin is dissolved, so as to form a jellied film on the surface of the brown rice. The brown rice coated with the jellied film is soaked in a germicidal solution at 15 to 20 degrees centigrade. Then, the temperature of the water is kept warm at 20 to 25 degrees centigrade, so that brown rice shoots are reared.

However, the above described conventional producing method has the following problems.
1. With the conventional producing method, the surface of brown rice must be coated with a jellied liquid in order to prevent the brown rice from becoming putrid, which requires a considerable amount of labor. In addition, when a large volume of germinated brown rice is produced, it is difficult to coat the whole of the brown rice with an even film pressure, and putrefaction starts from a portion with a thin film pressure if it exists.
2. Since the surface of brown rice is coated with a jellied liquid, and a germicidal solution, which is conventionally used, is kept at 15 to 20 degrees centigrade as described above, a long time period (for example, one week or so) is required to rear shoots, leading to a significant decrease in production efficiency especially when brown rice is mass-produced. Furthermore, the number of times that the germicidal solution is renewed is conventionally large due to the long time period required to rear the shoots, leading to an increase in the volume of used water.
   Furthermore, as recited in Japanese Laid-open Patent Publication No. 2502905, which was previously proposed by the present applicant, there is a method blowing reformed gas and misty water against the surface of brown rice that is carried by a conveyer, or a method filling brown rice into a container and germinating the brown rice. These methods, however, have the following problems.
3. With the method disclosed by this patent publication, roots emerge from part of brown rice if a pigeon-breast-state germinated portion of brown rice contacts an oxygen molecule, so that the taste and the appearance of germinated brown rice can possibly be deteriorated. Note that the emergence of roots from brown rice is defined to be the emergence of roots.
4. Furthermore, with the method recited in the above described patent publication, brown rice is germinated while being carried by a conveyer. Therefore, a conveyer having a length sufficient for allowing brown rice to be carried until germination must be arranged. Consequently, not only the scale of facilities becomes large, but also a wide arrangement space must be secured.
5. With the method filling brown rice into a container and germinating the brown rice, germinated sprouts or roots that have emerged from brown rice contact each other, or a sprout or a root contacts the inside wall of the container, etc., so that the sprouts or roots can possibly drop. Notice that "germination" means both of "sprouting" and "root emergence". The present invention, however, aims at promoting the sprouting of brown rice.
   To overcome the above described problems 3 to 5, a study is conducted in a way such that brown rice is kept floating in water, its roots are prevented from emerging and sprouts are prevented from dropping. However, since fresh tap water must be continuously supplied to remove microorganisms and bacteria contained in water, so that used tap water is drained uselessly.
   The present invention therefore aims at providing a sprouting brown rice producing device which overcomes the above described problems.

### Disclosure of Invention

A sprouting brown rice producing device according to one preferred embodiment of the present invention comprises: a sprouting container, to which brown rice and water are supplied, promoting the sprouting of brown rice by soaking the brown rice in water; and a recycled water generating unit generating recycled water by removing bacteria and organic substances contained in waste water collected from the sprouting container, and making the recycled water flow back to the sprouting container.

Therefore, according to this preferred embodiment, brown rice is soaked in water within the container filed by this application, and at the same time, recycled water is generated by removing bacteria and organic substances from waste water collected from the sprouting container, and the recycled water is made to flow back to the sprouting container, thereby promoting the sprouting of brown rice and increasing the production efficiency of sprouting brown rice. As a result, brown rice shoots can be efficiently grown for a short time.

Additionally, sprouts can be prevented from being dropped by a mechanical collision, and a defect ratio can be reduced by preventing roots from emerging. Furthermore, drained water collected from the sprouting container can be recycled, so that water can be prevented from being drained uselessly and wasted by reducing the volume of used water.

A sprouting brown rice producing device according to another preferred embodiment of the present invention comprises: a container into which brown rice is filled and water is supplied; a storage tank, which is arranged on the periphery of the container, storing water overflowing from the top of the container; a deaerator reducing the concentration of oxygen dissolved in water within the storage tank; a heater heating the water the oxygen concentration of which is reduced by the deaerator to a predetermined temperature; and a pump unit supplying the warm water heated by the heater to the bottom of the container.

Therefore, according to this preferred embodiment, deaerated warm water is supplied to the container in a state where the container is filled with brown rice, whereby the sprouting of brown rice can be efficiently promoted with a relatively small volume of water.

Furthermore, sprouting is promoted by supplying a slow flow of warm water among the grains of brown rice stacked in the container. As a result, the production cost can be reduced by decreasing the volume of used water, roots of brown rice can be prevented from emerging by suitably reducing, to an optimum concentration, the concentration of oxygen dissolved in the warm water that the deaerator supplies to the container, and the sprouting of brown rice within the container can be promoted.

### Brief Description of Drawings

Fig. 1 shows the system configuration of a sprouting brown rice producing device according to a preferred embodiment of the present invention;
Fig. 2 shows the system configuration of a modification 1 of the present invention;
Fig. 3 shows the system configuration of a modification 2 of the present invention;
Fig. 4 shows the system configuration of a modification 3 of the present invention;
Fig. 5 shows the system configuration of a modification 4 of the present invention; and
Fig. 6 shows the production process of germinated brown rice, when the sprouting brown rice producing device according to the present invention is used.

### Best Mode of Carrying Out the Invention

The present invention is described in detail with reference to the attached drawings.

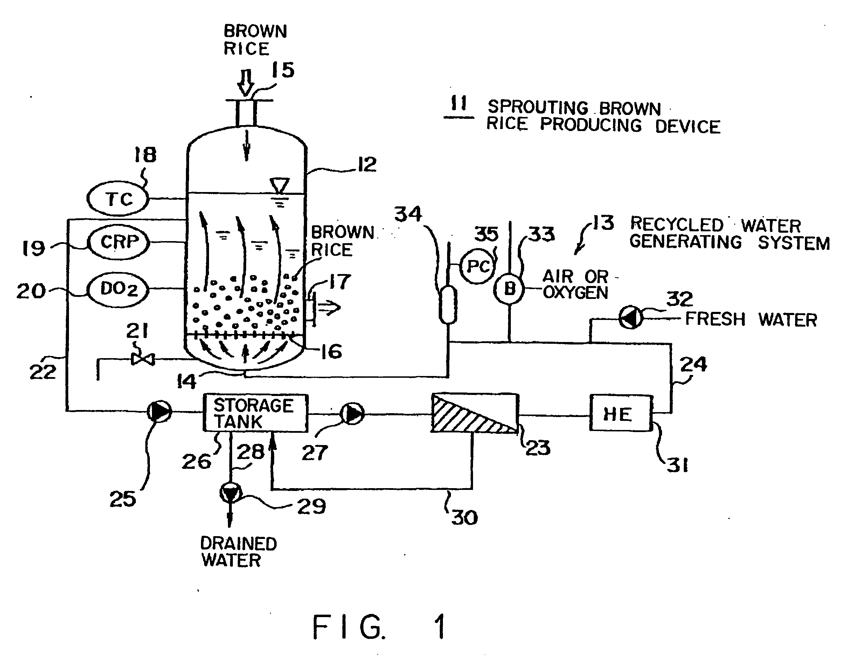

Fig. 1 shows the system configuration of a sprouting brown rice producing device according to a preferred embodiment of the present invention.

As shown in this figure, a sprouting brown rice producing device 11 comprises, in general, an airtight sprouting promoting tank (sprouting container) 12 to which brown rice and water for promoting sprouting are supplied, and a recycled water generating system (recycled water generating unit) 13 making the water recycled by purifying warm water used in the sprouting promoting tank 12 flow back to the sprouting promoting tank 12.

The sprouting promoting tank 12 is a cylinder-shaped tank of a vertical type, which is arranged to extend upward and downward. A water supply inlet 14 for supplying warm water as a sprouting promoting liquid is arranged at the bottom of the sprouting promoting tank 12, and a raw material charge inlet 15 for charging brown rice as a raw material is arranged at the top. Brown rice charged inside the sprouting promoting tank 12 from the raw material charge inlet 15 is kept floating in water supplied from the water supply inlet 14. It should be noted that the sprouting promoting liquid supplied from the raw material charge inlet 15 is warm water at a predetermined temperature, which promotes the sprouting of brown rice, and is adjusted to be the concentration of dissolved oxygen, which can prevent the roots of brown rice from emerging, whereby the sprouting promoting liquid can provide an environment optimum for promoting the sprouting of brown rice.

Additionally, a porous plate (a prevention member) 16 preventing brown rice from dropping is arranged at the bottom of the sprouting promoting tank 12. Many holes smaller than brown rice grains are arranged on the porous plate 16, which prevents brown rice from falling so as not to block the water supply inlet 14. Wire gauze finer than brown rice grains may be available as a replacement of the porous plate 16.

Furthermore, a rice outlet 17 for taking out sprouting brown rice is arranged on the side of the sprouting promoting tank 12 positioned above the porous plate 16. The rice outlet 17 is shut by a valve for taking out sprouting brown rice (not shown), which is opened when the sprouting of brown rice charged into the sprouting promoting tank 12 is completed.

For the sprouting promoting tank 12, a temperature indicator (TC) 18 for controlling the temperature of warm water supplied from the water supply inlet 14, an oxidation-reduction electrometer (CRP) 19 for controlling the oxidation of warm water supplied from the water supply inlet 14, and a dissolved oxygen indicator (DO₂) 20 for controlling the oxygen dissolved in warm water supplied from the water supply inlet 14 are arranged. Also a drain valve 21 opened when water within the sprouting promoting tank 12 is externally drained is arranged at the bottom of the sprouting promoting tank 12.

To the upper side of the sprouting promoting tank 12, a warm water collection pipe 22 for collecting used warm water within the tank is connected.

The recycled water generating system 13 comprises the warm water collection pipe 22 collecting warm water overflowing from the top of the sprouting promoting tank 12, a filtering module (removing unit) 23 removing bacteria and organic substances contained in the warm water collected from the sprouting promoting tank 12, and a flowing-back pipe 24 supplying recycled water emitted from the filtering module 23 to the bottom of the sprouting promoting tank 12.

A first water conveying pump 25 conveying the warm water collected from the sprouting promoting tank 12, and a storage tank 26 temporarily storing the water collected by the first water conveying pump 25, and a second water conveying pump 27 conveying the water stored in the storage tank 26 to the filtering module 23 are arranged on the warm water collection pipe 22.

To the storage tank 26, a waste pipe 28 for draining dirty water including extraneous substances such as organic substances precipitated at the bottom of the tank is connected. A draining pump 29, which is periodically driven, is arranged on the waste pipe 28.

The filtering module 23 has a filter structure in which filters such as a filtering penetration film, an ultrafilter memberane, a microfilter, etc. are combined, and generates purified recycled water by filtering extraneous substances such as bacteria, organic substances, etc., which are contained in the water collected from the sprouting promoting tank 12, in stages. The bacteria, organic substances, etc. separated by the filters from the recycled water are returned to the bottom of the storage tank 26 via a drain pipe 30, and externally drained from the waste pipe 28 along with the water within the storage tank 26.

The filter structure accommodated by the filtering module 23 may be a combination of a plurality of filters having different filtering characteristics as described above, or only a particular filter according to the nature of an extraneous substance to be removed, as a matter of course.

Additionally, for the flowing-back pipe 24 connecting between the filtering module 23 and the water supply inlet 14 of the sprouting promoting tank 12, a heat exchanger 31 heating recycled water filtered by the filtering module 23 to be warm water at a predetermined temperature, a water pump mixing fresh water with the warm water from the heat exchanger 31, an air blower (oxygen supplying unit) 33 mixing air or oxygen with the water flowing through the flowing-back pipe 24 and dissolving oxygen, and a deaerating tank 34 removing surplus air or oxygen contained in the water flowing through the flowing-back pipe 24, and the like are arranged.

The heat exchanger 31 heats recycled water emitted from the filtering module 23 so that the temperature of warm water poured into the sprouting promoting tank 12 becomes a suitable temperature (for example, 30 to 34 degrees centigrade or so), which can promote the sprouting of brown rice. It should be remembered that fresh tap water is supplied to the flowing-back pipe 24 by the water supply pump 32, and recycled water and the tap water are mixed at an arbitrary ratio and supplied to the sprouting promoting tank 12 in this preferred embodiment. Accordingly, the heat exchanger 31 adjusts the heating temperature of recycled water to be a suitable temperature according to the temperature of water supplied from the water supply pump, so that the temperature of mixed water becomes a suitable temperature.

Furthermore, a pressure controller 35 controlling pressure with a vacuum exhaust pump which exhausts a gas within the deaerating tank 34 is connected above the deaerating tank 34. Inside of the deaerating 34 has a gas-liquid separation structure, which separates surplus air or oxygen contained in water, and emits the surplus air or oxygen into the atmosphere.

In the recycled water generating system 13 configured as described above, water used in the sprouting promoting tank 12 is purified with the filtering module 23, and circulated to flow back to the sprouting promoting tank 12, whereby the water can be reused and a large volume of water is not drained uselessly. As a result, a production cost can be reduced, and precious water resources can be effectively used, so that a desirable result can be obtained also from an environment conservation viewpoint.

Furthermore, in the recycled water generating system 13, recycled water supplied to the sprouting promoting tank 12 is adjusted to be a temperature which can promote the sprouting of brown rice, and to be a dissolved oxygen concentration which can prevent roots from emerging and promote the sprouting. Therefore, a time required for the production process of sprouting brown rice (approximately 32 to 60 hours) in the sprouting promoting tank 12 is shortened, leading to a further increase in the production efficiency of sprouting brown rice.

Moreover, since brown rice is floating in water within the sprouting promoting tank 12, sprouts never drop during a mechanical conveyance process unlike the conventional process of sprouting brown rice while being carried by a conveyer. As a result, a defect ratio can be improved.

For example, with the method recited in the above described Japanese Laid-open Patent Publication No. 2502905, brown rice is sprouted by spraying water with a low concentration of dissolved oxygen on brown rice stacked on a conveyer and by sending reformed gas with a low concentration of oxygen. With such a conventional method, an oxygen molecule can possibly contact a sprout at an early stage of sprouting. For this reason, it is impossible to prevent roots from emerging from brown rice.

In the meantime, according to this preferred embodiment, brown rice is made to float in the water within the sprouting promoting tank 12, and oxygen dissolved in the water is adjusted to be an optimum range (approximately 20 to 50 percent of the standard atmospheric pressure). By making dissolved oxygen contact the albumen or the sprouting portion of sprouting brown rice, roots do not emerge from the brown rice during a sprouting process, and only the emergence and the growth of sprouts are recognized to advance. As described above, the emergence and the growth process of sprouts in a sprouting process are defined to be "sprouting".

Additionally, since complete sterilization cannot be performed even with chlorination using sodium hypochlorite in a rice washing process step at a stage preceding the above described sprouting process step, and organic substances such as carbohydrates, etc. are dissolved from brown rice, facultative anaerobes such as pseudomonas, bacillus, etc. cannot be prevented from multiplying. Therefore, the facultative anaerobes and organic substances are suppressed during the sprouting of brown rice by adjusting the temperature of water and dissolved oxygen within the sprouting promoting tank 12.

Furthermore, according to this preferred embodiment, brown rice is made to float in water within the sprouting promoting tank 12, whereby production efficiency can be further increased by omitting a conventionally performed soaking process step, that is, the soaking process step in which brown rice is soaked after being washed, and a sprouting portion is shaped like a pigeon breast.

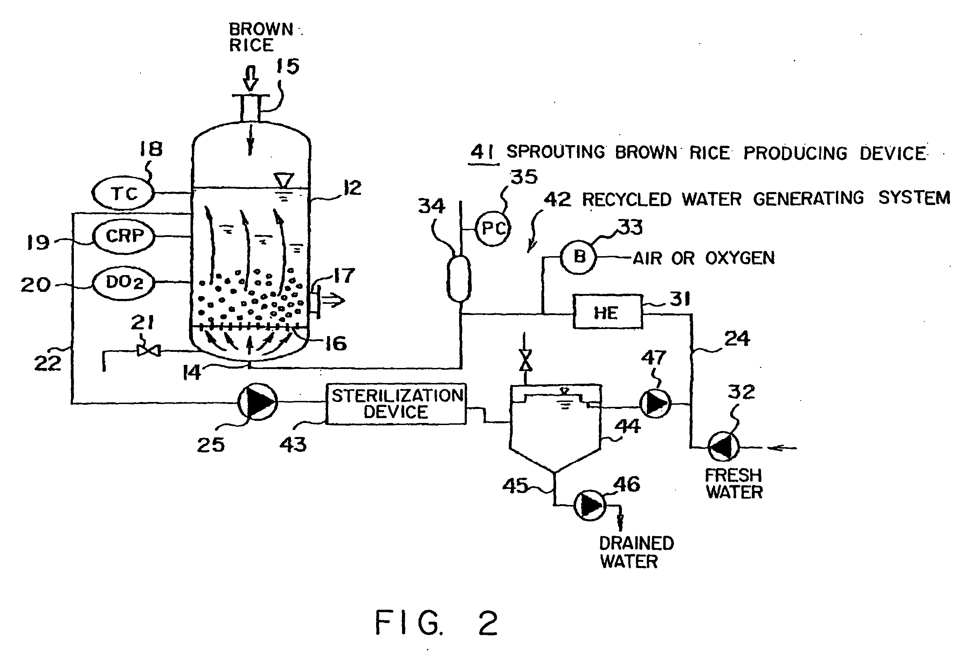

Fig. 2 shows the system configuration of a modification 1 of the present invention. In this figure, the same constituent elements as those shown in Fig. 1 are denoted with the same reference numerals, and their explanations are omitted.

As shown in Fig. 2, a sprouting brown rice producing device 41 as the modification 1, in general, comprises a sprouting promoting tank 12, and a recycled water generating system (recycled water generating unit) 42 recycling water used in the sprouting promoting tank 12 and making the recycled water flow back to the sprouting promoting tank 12.

In the recycled water generating system 42, a sterilization device 43 and a precipitation bath 44 are arranged between a warm water collection pipe 22 and a flowing-back pipe 24. The sterilization device 43 is implemented by a supersonic wave irradiation device that sterilizes with supersonic waves bacteria contained in the warm water collected from the sprouting promoting tank 12 via the warm water collection pipe 22.

Furthermore, an ultraviolet ray irradiation device that sterilizes with ultraviolet rays the bacteria contained in the warm water may be available as the sterilization device 43 instead of the ultrasonic wave irradiation device.

The precipitation bath 44 is arranged to remove organic substances, etc. contained in warm water. Precipitates at the bottom of the precipitation bath 44 are externally drained by a drain pump 46 on the drain pipe 45. A supernatant liquid isolated from the precipitates within the precipitation bath 44 is emitted to the flowing-back pipe 24 by a conveying pump 47 as recycled water.

With the recycled water generating system 42 thus configured, extraneous substances such as organic substances, etc. can be removed after water used in the sprouting promoting tank 12 is sterilized likewise the above described recycled water generating system 13. Consequently, precious water can be reused, the volume of consumed water can be reduced, and the production efficiency of sprouting brown rice can be increased.

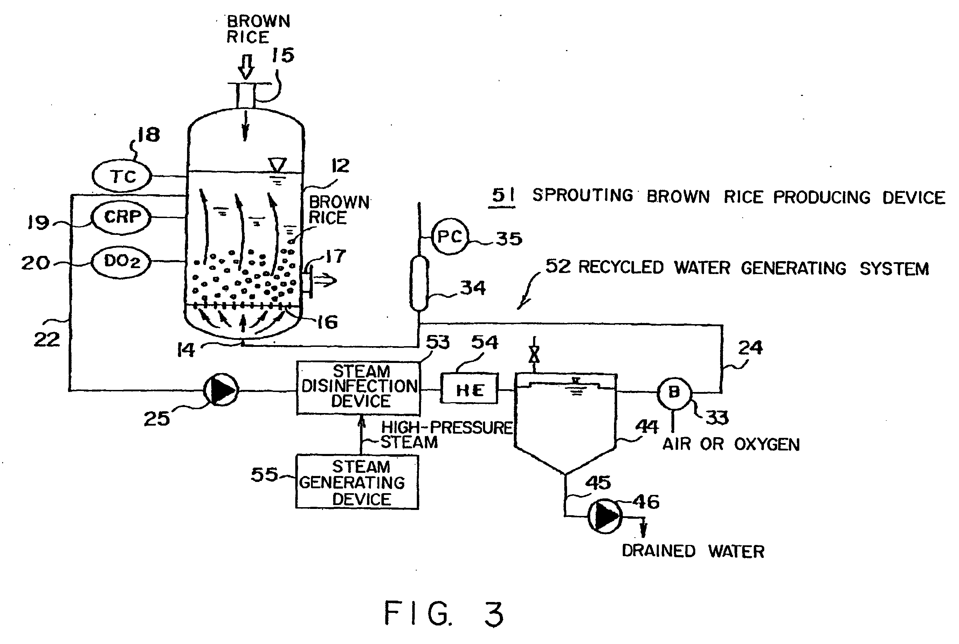

Fig. 3 shows the system configuration of a modification 2 of the present invention. In this figure, the same constituent elements as those shown in Fig. 1 or 2 are denoted with the same reference numerals, and their explanations are omitted.

As shown in Fig. 3, a sprouting brown rice producing device 51 as the modification 2 comprises, in general, a sprouting promoting tank 12, and a recycled water generating system (recycled water generating unit) 52 recycling warm water used in the sprouting promoting tank 12 and making the recycled water flow back to the sprouting promoting tank 12.

In the recycled water generating system 52, a steam disinfection device 53, a cooling heat exchanger 54, and a precipitation bath 44 are arranged between a warm water collection pipe 22 and a flowing-back pipe 24. The steam disinfection device 53 disinfects bacteria contained in the water collected from the sprouting promoting tank 12 via the warm water collection pipe 22 by using high-pressure steam.

In this preferred embodiment, high-pressure steam (the pressure of which is 0. 12 to 0.15 MPa) generated by a steam generating device 55 is supplied to the steam disinfection device 53, which heats collected water to 90 to 95 degrees centigrade and disinfects the bacteria contained in the collected warm water. The disinfected warm water is cooled down and made suitable for sprouting by the cooling heat exchanger 54.

Then, organic substances, etc. contained in the warm water collected by the above described precipitation bath 44 are removed. A supernatant liquid isolated from the precipitates within the precipitation bath 44 is emitted to the flowing-back pipe 24 as recycled water.

With the recycled water generating system 52 thus configured, extraneous substances such as organic substances, etc. can be removed after warm water used in the sprouting promoting tank 12 is sterilized. As a result, precious water can be reused, the volume of consumed water can be reduced, and the production efficiency of sprouting brown rice can be increased.

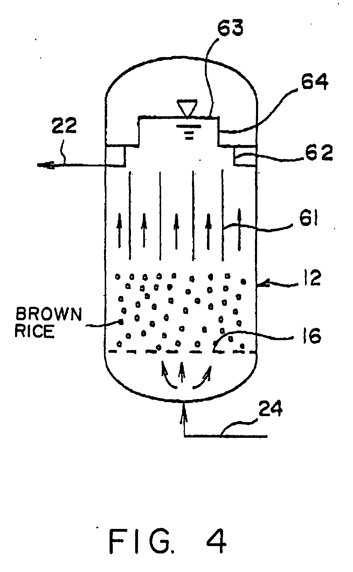

Fig. 4 shows the system configuration of a modification 3 of the present invention.

As shown in this figure, a plurality of rectifying plates 61, which extend upward and downward, are arranged within a sprouting promoting tank 12. Since the plurality of rectifying plates 61 are arranged in parallel at predetermined intervals, a local increase in the speed of running water is prevented within the sprouting promoting tank 12, and the speed of water running from the bottom to the top of the sprouting promoting tank 12 is averaged within the whole of the sprouting promoting tank 12. Accordingly, also the movement of brown rice floating within the sprouting promoting tank 12 is averaged, thereby promoting the sprouting as a whole.

Furthermore, an overflowing gutter (overflowing member) 62 for externally guiding water overflowing from the sprouting promoting tank 12 is arranged in the upper portion of the sprouting promoting tank 12. This overflowing gutter 62 is implemented by a ring ditch installed inside at the top of the sprouting promoting tank 12, and guides warm water overflowing from an overflow outlet 64 formed in the circumference of a circular protruding part 63 to a warm water collection pipe 22.

As described above, while warm water is supplied to the bottom of the sprouting promoting tank 12, warm water overflows into the overflowing gutter 62 formed in the circumference from the center at the top of the sprouting promoting tank 12, and is drained to the warm water collection pipe 22 via the overflowing gutter 62. Accordingly, warm water overflowing from the sprouting promoting tank 12 is made to stably flow from the center of the sprouting promoting tank 12. As a result, the speed of running water and that of a water current where brown rice is floating within the sprouting promoting tank 12 are stabilized, whereby sprouting can be promoted as a whole.

Note that the rectifying plates 61 and the overflowing gutter 62 may be arranged alone respectively or together.

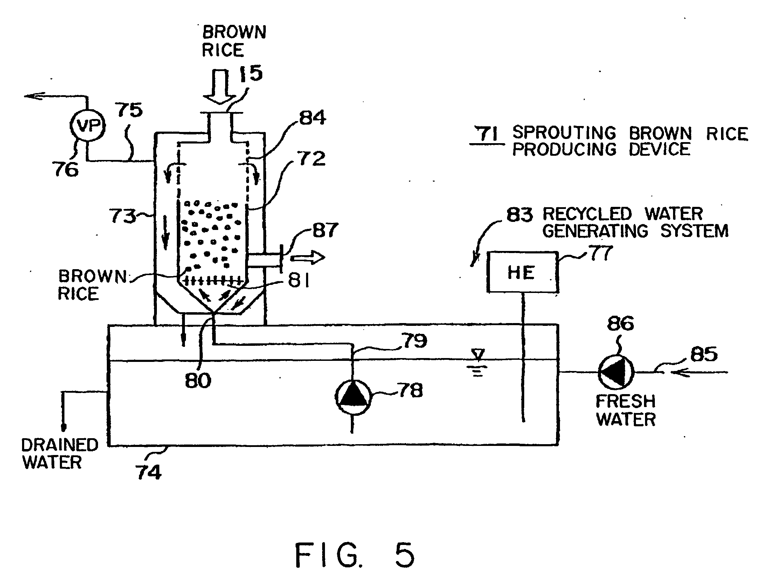

Fig. 5 shows the system configuration of a modification 4 of the present invention.

As shown in this figure, a sprouting brown rice producing device 71 as the modification 4 comprises, in general, an airtight tank (container) 72 into which brown rice is filled and water is supplied, a storage tank (storage container) 73 storing warm water flowing from the top of the tank 72, and a warm water bath 74.

On a deaeration pipe 75 connected to the storage tank 73, a vacuum pump (deaerating unit) 76 is arranged. Accordingly, oxygen dissolved in the warm water collected from the tank 72 is deaerated by the vacuum exhaust pump 76, so that the concentration of oxygen is reduced. The water the oxygen concentration of which is reduced by the vacuum exhaust pump 76 is temporarily stored in the warm water bath 74 arranged below the storage tank 73.

For the warm water bath 74, a heater 77 heating collected warm water to a predetermined temperature suitable for sprouting is arranged. Warm water heated to a temperature that can promote sprouting is stored within the warm water bath 74. Furthermore, a conveying pump 78 conveying warm water to the tank 72 is arranged in the warm water bath 74. This conveying pump 78 is connected to a water supply inlet 80 arranged at the bottom of the tank 72. Accordingly, when the conveying pump 78 is driven, the warm water stored in the warm water bath 74 is supplied to the bottom of the tank 72.

A porous plate 81 preventing brown rice from dropping is horizontally arranged at the bottom of the tank 72 so as not to block the water supply inlet by brown rice. Warm water that the conveying pump 78 conveys to the bottom of the tank 72 passes through a plurality of small holes formed on the porous plate 81, and is gradually supplied among the grains of brown rice stacked on the surface of the porous plate 81, so that the sprouting is promoted.

The warm water conveyed by the conveying pump 78, which passes through the small holes on the porous plate 81, is supplied to brown rice at a speed which does not move the brown rice stacked onto the surface of the porous plate 81. Accordingly, with the recycled water generating system 83 configured as described above, warm water supplied to the tank 72 is adjusted to be a temperature which can promote the sprouting of brown rice, and to an oxygen concentration which can prevent roots from emerging and promote the sprouting of brown rice. Therefore, a time period required for a sprouting process step in which brown rice is sprouted within the tank 72 can be reduced, and the production efficiency of sprouting brown rice can be further increased.

Besides, brown rice does not move in water within the tank 72. Therefore, sprouts never drop during a mechanical conveyance process unlike a conventional technique with which brown rice is sprouted while being carried by a conveyer, leading to an improvement in a defect ratio.

Furthermore, the storage tank 73 is arranged as a dual structure in order to cover the outside of the tank 72. As a result, warm water overflowing from an opening 84 which is arranged at the circumference in the upper portion of the tank 72 is emitted to the storage tank 73, and collected. The warm water collected by the storage tank 73 is made to flow back to the warm water bath 74 after its oxygen concentration is reduced by being deaerated by the vacuum exhaust pump 76. Since warm water supplied to the tank 72 is circulated in this way, it is recycled many times.

Additionally, a water supply pipe 85 conveying fresh tap water is connected to the warm water bath 74, and a water supply pump 86 is arranged for the water supply pipe 85. Therefore, not only warm water collected by the storage tank 73, but also tap water supplied by the water supply pump 86 is replenished into the warm water bath 74.

Brown rice that has sprouted is taken out from a sprouting brown rice outlet 87 which penetrates into the storage tank 73 from the bottom of the tank 72 and is arranged on the side of the storage tank 73.

According to the modification 4, deaerated warm water is supplied to the tank 72 into which brown rice is filled. Consequently, sprouting of brown rice can be efficiently promoted with a relatively small volume of water, a production cost can be decreased by reducing the volume of used water. At the same time, by adjusting the concentration of oxygen dissolved in the warm water supplied by the vacuum exahust pump 76 to the tank 72 to be a concentration optimum for sprouting, roots of brown rice can be prevented from emerging, and the sprouting of brown rice within the tank 72 can be promoted.

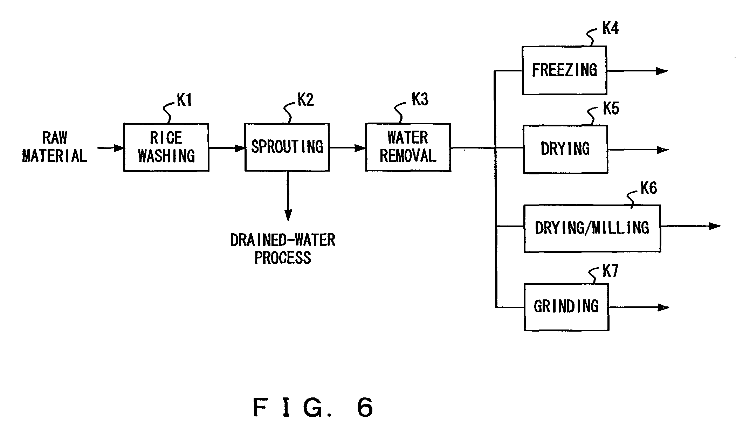

Here, the operations of the sprouting brown rice producing device configured as described above and a production process of sprouting brown rice are explained. Fig. 6 is a schematic diagram showing the production process of sprouting brown rice when the sprouting brown rice producing device according to the present invention is used.

In this figure, well-selected brown rice as a raw material is washed with washing water in a rice washing process step K1.

In the next sprouting process step K2, brown rice as a raw material is charged into the sprouting promoting tank 12 or the tank 72 of the above described sprouting brown rice producing device 11, 41, 51, or 71, and purified warm water is supplied to the sprouting promoting tank 12 or the tank 72 to sprout the brown rice. At the same time, used water drained from the sprouting promoting tank 12 or the tank 72 is recycled (drained-water-processed).

In the next water-removing process step K3, cleansed brown rice is conveyed to a water-removing device (not shown) so as to remove cleansing water. Since brown rice is made to float or stacked in the water poured into the sprouting promoting tank 12 or the tank 72 according to the present invention, a soaking process step is unnecessary.

In the water-removing process step K3, brown rice sprouted within the sprouting promoting tank 12 or the tank 72 is carried to the water-removing device with a conveyer, etc., and surplus water absorbed by the surface of the brown rice and impurities adhered to the surface of the brown rice are removed.

The brown rice that passes through the above described water-removing device is carried as a commercial product, and transferred to a freezing process step K4, a drying process step K5, a drying/milling process step K6, or a grinding process step K7 depending on a use purpose.

By producing sprouting brown rice with the sprouting brown rice producing device 11, 41, 51, or 71 according to the present invention as described above, the number of production process steps for sprouting brown rice can be significantly reduced, because a soaking process step, a steaming/boiling process step, etc. are omitted in comparison with a conventional production process. In consequence, a production time can be shortened and the production efficiency can be further increased.

As described above, the sprouting brown rice producing device 11 according to the first preferred embodiment of the present invention comprises: a sprouting container 12, to which brown rice and water are supplied, promoting the sprouting of brown rice by soaking the brown rice in water; and a recycled water generating unit 13 generating recycled water by removing bacteria and organic substances contained in the drained water collected from the sprouting container 12, and making the recycled water flow back to the sprouting container 12.

Accordingly, since the first sprouting brown rice producing device 11 according to the present invention soaks brown rice in water within the sprouting container, generates recycled water by removing bacteria and organic substances contained in the drained water collected from the sprouting container 12, and makes the recycled water flow back to the sprouting container 12, the production efficiency of sprouting brown rice can be increased by promoting the sprouting of brown rice. As a result, brown rice shoots can be grown up for a shorter time by being efficiently reared.

Additionally, sprouts can be prevented from dropping due to a mechanical collision, and roots can be prevented from emerging, thereby improving the defect ratio. Furthermore, drained water collected from the sprouting container 12 can be recycled, whereby the wastage of used water can be prevented by draining water uselessly and by reducing the volume of used water.

Additionally, the first sprouting brown rice producing device 11 according to the present invention, in which an brown rice supply inlet 15 for supplying brown rice is arranged at the top of the sprouting container 12 and a water supply inlet 14 for supplying water from the recycled water generating unit is arranged at the bottom of the sprouting container 12, can achieve the following implementations.

Since the brown rice supply inlet 15 and the water supply inlet 14 are respectively arranged at the top and the bottom of the sprouting container 12, water supplied from the water supply inlet 14 in the lower portion of the sprouting container 12 flows upward within the sprouting container 12, and also brown rice made to float in water is circulated by a water current within the sprouting container 12. As a result, an oxygen molecule can be prevented from contacting a sprout of brown rice, and at the same time, the sprout of the brown rice can be prevented from dropping. In addition, a water current flowing from downward to upward can prevent the bacteria generated within the water from continuously adhering to the brown rice.

Additionally, the first sprouting brown rice producing device 11 according to the present invention, in which an brown rice supply inlet 15 for supplying brown rice is arranged at the top of the sprouting container 12, a water supply inlet 14 for supplying the water from the recycled water generating unit is arranged at the bottom of the sprouting container 12, an brown rice outlet 17 for taking out sprouting brown rice is arranged on the side of the sprouting container 12, and a prevention member 16 preventing brown rice from dropping is arranged below the sprouting brown rice outlet 17 within the sprouting container 12, can achieve the following implementations.

Since the sprouting brown rice outlet 17 is arranged on the side of the sprouting container 12 and the prevention member 16 preventing brown rice from dropping is arranged below the sprouting brown rice outlet 17 within the sprouting container 12, sprouting brown rice can be easily taken out from the sprouting brown rice outlet 17, and can be prevented from blocking the water supply inlet 14 with the prevention member 16.

Furthermore, the first sprouting brown rice producing device 11 according to the present invention, in which the recycled water generating unit 13 comprises a collection pipe 22 collecting water overflowing from the top of the sprouting container 12, a removing unit 23 removing bacteria and organic substances contained in the water collected via the collection pipe 22, and a flowing-back pipe 24 supplying the recycled water emitted from the removing unit 23 to the bottom of the sprouting container 12, can achieve the following implementations.

The removing unit 23 removes bacteria and organic substances from the water overflowing from the top of the sprouting container 12, and recycled water emitted from the removing unit 23 via the collection pipe 22, and the flowing-back pipe 24 can be supplied to the bottom of the sprouting container 12, so that used water can be recycled without being drained uselessly. Accordingly, water can be effectively used, and recycled water is stably supplied to the bottom of the sprouting container to allow the sprouting of brown rice to be efficiently promoted.

Still further, the first sprouting brown rice producing device 11 according to the present invention, in which: the recycled water generating unit 13 comprises a collection pipe 22 collecting water overflowing from the top of the sprouting container 12, a removing unit 23 removing bacteria and organic substances contained in the water collected via the collection pipe 22, and a flowing-back pipe 24 supplying the recycled water emitted from the removing unit to the bottom of the sprouting container; and the removing unit 23 comprises a filtering member filtering and removing the bacteria and organic substances contained in the water collected via the collection pipe, can achieve the following implementations.

Since the water collected from the sprouting container 12 can be filtered and recycled by the filtering member, sprouting of brown rice can be efficiently promoted by removing the bacteria and organic substances contained in the water with high efficiency, and by stably supplying recycled water to the sprouting container 12.

Still further, the first sprouting brown rice producing device 11 according to the present invention, in which: the recycled water generating unit 13 comprises a collection pipe 22 collecting water overflowing from the top of the sprouting container 12, a removing unit 23 removing bacteria and organic substances contained in the water collected via the collection pipe 22, and a flowing-back pipe 24 supplying the recycled water emitted from the removing unit to the bottom of the sprouting container; and a heating unit 31 heating the recycled water emitted from the removing unit 23 to a predetermined temperature is arranged on the flowing-back pipe 24, can achieve the following implementations.

The temperature of recycled water supplied to the sprouting container 12 can be adjusted to a suitable temperature that can promote the sprouting of brown rice by heating the recycled water emitted from the removing unit 23 to a predetermined temperature, so that the recycled water the temperature of which is adjusted to be a suitable temperature can be stably supplied to the sprouting container 12.

Still further, the first sprouting brown rice producing device 11 according to the present invention, in which: the recycled water generating unit 13 comprises a collection pipe 22 collecting water overflowing from the top of the sprouting container 12, a removing unit 23 removing bacteria and organic substances contained in the water collected via the collection pipe 22, and a flowing-back pipe 24 supplying the recycled water emitted from the removing unit to the bottom of the sprouting container; and unused fresh water is mixed with the recycled water emitted from the removing unit 23 on the flowing-back pipe 24, can achieve the following implementations.

Recycled water can be made closer to fresh water by mixing unused fresh water with the recycled water emitted from the removing unit 23, and the volume of decreased water can be replenished during a recycling process, thereby securing the water level of the sprouting container 12.

Still further, the first sprouting brown rice producing device 11 according to the present invention, in which: the recycled water generating unit 13 comprises a collection pipe 22 collecting water overflowing from the top of the sprouting container 12, a removing unit 23 removing bacteria and organic substances contained in the water collected via the collection pipe 22, and a flowing-back pipe 24 supplying the recycled water emitted from the removing unit to the bottom of the sprouting container; and an oxygen supplying unit 23 dissolving oxygen in the warm water emitted from the heating unit 23 is arranged on the flowing-back pipe 24, can achieve the following implementations.

Since oxygen is dissolved in the warm water emitted from the heating unit 23, a lack of oxygen within the sprouting container 12 can be resolved by increasing the concentration of oxygen within the water supplied to the sprouting container 12.

Still further, the first sprouting brown rice producing device 11 or 41 according to the present invention, in which: the recycled water generating unit 13 comprises a collection pipe collecting water overflowing from the top of the sprouting container, a removing unit removing bacteria and organic substances contained in the water collected via the collection pipe, and a flowing-back pipe supplying the recycled water emitted from the removing unit to the bottom of the sprouting container; and the removing unit 43 is a supersonic generator removing with ultrasonic waves the bacteria contained in the water collected via the collection pipe 22, can achieve the following implementations.

Since the bacteria contained in the water collected via the collection pipe 22 are removed with ultrasonic waves, a bacteria removal effect of the recycled water made to flow back to the sprouting container 12 can be further increased.

Still further, the first sprouting brown rice producing device 11 or 41 according to the present invention, in which: the recycled water generating unit comprises a collection pipe collecting water overflowing from the top of the sprouting container, a removing unit removing bacteria and organic substances contained in the water collected via the collection pipe, and a flowing-back pipe supplying the recycled water emitted from the removing unit to the bottom of the sprouting container; and the removing unit 43 is an ultraviolet irradiator removing with ultraviolet rays bacteria contained in the water collected via the collection pipe 22, can achieve the following implementations.

Since the bacteria contained in the water collected via the collection pipe 22 are removed with ultraviolet rays, a bacteria removal effect of the recycled water made to flow back to the sprouting container 12 can be further increased.

Still further, the first sprouting brown rice producing device 11 or 51 according to the present invention, in which: the recycled water generating unit comprises a collection pipe collecting water overflowing from the top of the sprouting container, a removing unit removing bacteria and organic substances contained in the water collected via the collection pipe, and a flowing-back pipe supplying the recycled water emitted from the removing unit to the bottom of the sprouting container; and the removing unit 53 is a steam supplying unit 55 removing with high-pressure steam bacteria contained in the water collected via the collection pipe 22, can achieve the following implementations.

Since the bacteria contained in the water collected via the collection pipe 22 are removed with high-pressure steam, a bacteria removal effect of the recycled water made to flow back to the sprouting container 12 can be further increased.

Still further, the first sprouting brown rice producing device 11, 41, or 51 according to the present invention, in which: the recycled water generating unit 13 comprises a collection pipe 22 collecting water overflowing from the top of the sprouting container 12, a removing unit 23 removing bacteria and organic substances contained in the water collected via the collection pipe 22, and a flowing-back pipe 24 supplying the recycled water emitted from the removing unit 23 to the bottom of the sprouting container 12; the removing unit 23 removes the bacteria contained in collected water with the ultrasonic generator, the ultraviolet irradiator, or the high-pressure steam; and a precipitation bath 44 precipitating extraneous substances which are contained in the recycled water and removed by the ultrasonic generator, the ultraviolet irradiator, or the high-pressure steam is arranged on the flowing-back pipe 24, can achieve the following implementations.

Since extraneous substances that are contained in the recycled water from which bacteria are removed with the ultrasonic generator, the ultraviolet irradiator, or the high-pressure steam can be precipitated and removed by arranging the precipitation bath 44 on the flowing-back pipe 24, recycled water supplied to the sprouting container 12 can be much more purified.

Still further, the first sprouting brown rice producing device 11 according to the present invention, in which rectifying plates 61 guiding a water current supplied from the bottom to the top are arranged within the sprouting container 12, can achieve the following implementation.

Since the rectifying plates 61 guiding upward a water current supplied from the bottom is arranged within the sprouting container 12, it becomes easy to control the speed of a water current circulating within the sprouting container 12.

Still further, the first sprouting brown rice producing device 11 according to the present invention, in which an overflowing member 62 externally guiding overflowing water upward is arranged in the upper portion of the sprouting container 12, can achieve the following implementation.

Since the overflowing member 62 externally guiding overflowing water upward is arranged in the upper portion of the sprouting container 12, the speed of a water current circulating within the sprouting container 12 can be made uniform.

Still further, the first sprouting brown rice producing device 11 according to the present invention, in which a deaerating unit 34 or 35 reducing the concentration of oxygen in the water within the sprouting container 12 is arranged, can achieve the following implementation.

Since the deaerating unit 34 or 35 reducing the concentration of oxygen in the water within the sprouting container 12 at an early stage of sprouting is arranged, roots of brown rice filled into the sprouting container 12 can be prevented from emerging, and the sprouting of brown rice can be promoted.

Still further, the second sprouting brown rice producing device 71 according to the present invention, which comprises a container 71 into which brown rice is filled and water is supplied, a storage tank 73, which is arranged on the periphery of the container 72, storing water overflowing from the container 72, a deaerating unit 76 reducing the concentration of oxygen dissolved in the water within the storage tank 73, a heater 77 heating the water the oxygen concentration of which is reduced by the dearerating unit 76 to a specified temperature, and a pump unit 78 supplying the warm water heated by the heater 77 to the bottom of the container 72.

Accordingly, the second sprouting brown rice producing device 71 according to the present invention supplies deaerated warm water to the container 72 into which brown rice is filled, thereby efficiently promoting the sprouting of brown rice with a relatively small volume of water. Furthermore, sprouting is promoted by supplying a slow flow of warm water among brown rice grains stacked in the container 72. As a result, a production cost can be reduced by decreasing the volume of used water, and the concentration of oxygen dissolved in the warm water supplied to the container 72 is adjusted to be a suitable concentration by the deaerating unit 76, so that roots can be prevented from emerging, and the sprouting of brown rice within the container 72 can be promoted.

### Industrial Applicability

As described above, a sprouting brown rice producing device according to the present invention is suitable for shortening a time required for rearing brown rice shoots by promoting the sprouting of brown rice, and for reducing the volume of used water. Furthermore, the present invention is applicable to the sprouting promotion and the rearing of not only brown rice, but also a different seed.

## Claims

1. A sprouting brown rice producing device (11), comprising:
a sprouting container (12), into which brown rice and water are supplied, promoting sprouting by soaking the brown rice in water; and
a recycled water generating unit (13) generating recycled water by removing bacteria and organic substances contained in drained water collected from said sprouting container (12), and making the recycled water flow back to said sprouting container (12).

2. The sprouting brown rice producing device (11) according to claim 1, wherein:
an unpolished supply inlet (15) for supplying brown rice to a top of said sprouting container (12); and
a water supply inlet (14) for supplying water from said recycled water generating unit to a bottom of said sprouting container (12).

3. The sprouting brown rice producing device (11) according to claim 2, wherein:
a sprouting brown rice outlet (17) for taking out sprouting brown rice is arranged on a side of said sprouting container (12); and
a prevention member (16) preventing brown rice from dropping is arranged within said sprouting container (12) so as to be positioned below said sprouting brown rice outlet (17).

4. The sprouting brown rice producing device (11) according to claim 1, wherein
said recycled water generating unit (13) comprises
a collection pipe (22) collecting water overflowing from a top of said sprouting container (12),
a removing unit (23) removing bacteria and organic substances contained in the water collected via said collection pipe (22), and
a flowing-back pipe (24) supplying recycled water emitted from said removing unit (23) to a bottom of said sprouting container (12).

5. The sprouting brown rice producing device (11) according to claim 4, wherein
said removing unit (23) comprises a filtering member filtering and removing the bacteria and the organic substances contained in the water collected via said collection pipe (22).

6. The sprouting brown rice producing device (11) according to claim 4, wherein
a heating unit (31) heating the recycled water emitted from said removing unit (23) to a predetermined temperature is arranged on said flowing-back pipe (24).

7. The sprouting brown rice producing device (11) according to claim 4, wherein
unused fresh water is mixed with the recycled water emitted from said removing unit (23) on said flowing-back pipe (24).

8. The sprouting brown rice producing device (11) according to claim 6, wherein
an oxygen supplying unit (33) dissolving oxygen in warm water emitted from said heating unit (31) is arranged for said flowing-back pipe (24).

9. The sprouting brown rice producing device (11, 41) according to claim 4, wherein
said removing unit (43) is an ultrasonic generator removing with ultrasonic waves the bacteria contained in the water collected via said collection pipe (22).

10. The sprouting brown rice producing device (11, 41) according to claim 4, wherein
said removing unit (43) is an ultraviolet irradiator removing with ultraviolet rays the bacteria contained in the water collected via said collection pipe (22).

11. The sprouting brown rice producing device (11, 51) according to claim 4, wherein
said removing unit (53) is a steam supplying unit (55) removing with high-pressure steam the bacteria contained in the water collected via said collection pipe (22).

12. The sprouting brown rice producing device (11, 41) according to claim 9, wherein
a precipitation bath (44) precipitating extraneous substances contained in recycled water from which the bacteria is removed by the ultrasonic generator is arranged on said flowing-back pipe (24).

13. The sprouting brown rice producing device (11, 41) according to claim 10, wherein
a precipitation bath (44) precipitating extraneous substances contained in recycled water from which the bacteria are removed by the ultraviolet irradiator is arranged on said flowing-back pipe (24).

14. The sprouting brown rice producing device (11, 51) according to claim 11, wherein
a precipitation bath (44) precipitating extraneous substances contained in recycled water from which the bacteria are removed with the high-pressure steam is arranged on said flowing-back pipe (24).

15. The sprouting brown rice producing device (11) according to claim 1, wherein
rectifying plates (61) guiding upward a water current supplied from the bottom are arranged within said sprouting container (12).

16. The sprouting brown rice producing device (11) according to claim 1, wherein
an overflowing member (62) externally guiding overflowing water is arranged in an upper portion of said sprouting container (12).

17. The sprouting brown rice producing device (11) according to claim 1, further comprising
a deaerating unit (34, 35) reducing a concentration of oxygen in water within said sprouting container (12) at an early stage of sprouting.

18. A sprouting brown rice producing device (71), comprising:
a container (72) into which brown rice is filled and water is supplied;
a storage tank (73), which is arranged on the periphery of said container (72), storing water overflowing from a top of said container (72);
a deaerating unit (76) reducing a concentration of oxygen dissolved in water within said storage tank (73);
a heater (77) heating water an oxygen concentration of which is reduced by said deaerating unit (76) to a predetermined temperature; and
a pump unit (78) supplying warm water heated by said heater to a bottom of said container (72).

19. A method producing sprouting brown rice, comprising the steps of:
soaking brown rice within a sprouting container (12) in water, and promoting sprouting;
generating recycled water by removing bacteria and organic substances contained in drained water obtained by collecting the water in which the brown rice is soaked; and
making the recycled water flow back to said sprouting container (12).
